# EUROPÄISCHE PATENTSCHRIFT

(11) **EP 0 964 021 B1**
(45) Veröffentlichungstag und Bekanntmachung des Hinweises auf die Patenterteilung: **12.05.2004**
(21) Anmeldenummer: 99110615.4
(22) Anmeldetag: 02.06.1999
(51) Int. Cl.: C08G 77/48, C08G 77/28, C08K 5/54

(54) **Neue oligomere Organosilanpolysulfane, deren Verwendung in Kautschukmischungen und zur Herstellung von Formkörpern**
Oligomer organosilanpolysulfane, their use in rubber compositions and the preparation of articles
Organosilanpolysulfanes oligomères, leur application dans les mélanges de caoutchouc et la fabrication d'objets moulés

(30) Priorität: 10.06.1998 DE 19825796
(43) Veröffentlichungstag der Anmeldung: 15.12.1999
(73) Patentinhaber: Degussa AG, 40474 Düsseldorf (DE)
(72) Erfinder: Luginsland, Hans-Detlef, Dr., 50968 Köln (DE); Batz-Sohn, Christoph, Dr., 63452 Hanau (DE)

(56) Entgegenhaltungen:
- EP-A- 0 098 947
- DE-A- 2 141 159
- US-A- 6 140 393

## Beschreibung

Die vorliegende Erfindung betrifft neue oligomere Organosilanpolysulfane, ein Verfahren zu deren Herstellung sowie deren Verwendung in Kautschukmischungen und zur Herstellung von Formkörpern.

Es ist bekannt, schwefelhaltige Organosiliciumverbindungen wie 3-Mercaptopropyltrimethoxysilan oder Bis-(3-[Triethoxysilyl]-propyl)tetrasulfan als Silanhaftvermittler oder Verstärkungsadditiv in oxidisch gefüllten Kautschukmischungen einzusetzen, unter anderem für Laufflächen und andere Teile von Autoreifen (DE 2 141 159, DE 2 212 239, US 3 978 103, US 4 048 206).

Aus EP 0 784 072 A1 sind Kautschukmischungen auf der Basis mindestens eines Elastomers mit Kieselsäure als Füllstoff und einem Verstärkungsadditiv bekannt, das durch Abmischung oder als < in situ > Reaktionsprodukt aus wenigstens einer funktionellen Polyorganosiloxanverbindung hergestellt wird und die als weiteren Bestandteil ein funktionelles Organosilan enthalten. Als monomere Bausteine werden insbesondere 3-Mercaptopropyltrialkoxysilane oder Bis(trialkoxysilylpropyl)tetrasulfane verwendet, die jeweils 3 bzw. 6 Alkoxysubstituenten tragen.

Aus EP 0 098 947 sind polymere Mono-, Di-, Tri- und Tetrasulfidverbindungen bekannt. Die bekannten polymere Mono-, Di-, Tri- und Tetrasulfidverbindungen können zur Entfernung von Ionen oder Verbindungen der Elemente der I., II., VI.-VIII. Nebengruppe des Periodensystems sowie des Zinns und Bleis aus Lösungen verwendet werden.

Des weiteren ist bekannt, daß schwefelhaltige Silanhaftvermittler bei der Herstellung von Dichtungsmassen, Gießformen für den Metallguß, Farb- und Schutzanstrichen, Klebstoffen, Asphaltmischungen und oxidisch gefüllten Kunststoffen eingesetzt werden.

Schließlich ergeben sich Anwendungsmöglichkeiten bei der Fixierung von Wirkstoffen und funktionellen Einheiten auf anorganischen Trägermaterialien, z. B. bei der Immobilisierung von homogenen Katalysatoren und Enzymen, bei der Herstellung von Festbettkatalysatoren und bei der Flüssigkeitschromatographie.

Bei der Herstellung von Kautschukmischung mit Organosilanen und einem Füllstoff, beispielsweise einer gefällten Kieselsäure, vollzieht sich während eines ersten Mischprozesses, beispielsweise in einem Innenmischer eine chemische Reaktion. Bei dieser chemischen Reaktion handelt es sich um eine Kondensation zwischen dem Organosilan und dem Füllstoff, die mit einer erheblichen Freisetzung von Alkohol verbunden ist. Dieser abgespaltene Alkohol verursacht teilweise erhebliche technische Probleme bei der Weiterverarbeitung der Kautschukmischungen, wie Mischungsporosität bei der Extrusion oder unerwünschter Blasenbildung im Kautschuk selbst. Desweiteren ist eine Reduktion der Freisetzung von Alkohol während der Umsetzung aus Gesundheits- und Umweltsgründen erwünscht.

Es wurde nun gefunden, daß diese Nachteile des Standes der Technik weitgehend vermieden werden können durch den Einsatz von oligomeren Organosilanpolysulfane anstatt der bisher verwendeten monomeren schwefelhaltigen Organosiliciumverbindungen.

Demgemäß betrifft die vorliegende Erfindung neue oligomere Organosilanpolysulfane gemäß Anspruch 1, wobei das oligomere Organosilanpolysulfane aus den 3 Struktureinheiten A und/oder B und/oder C aufgebaut ist, 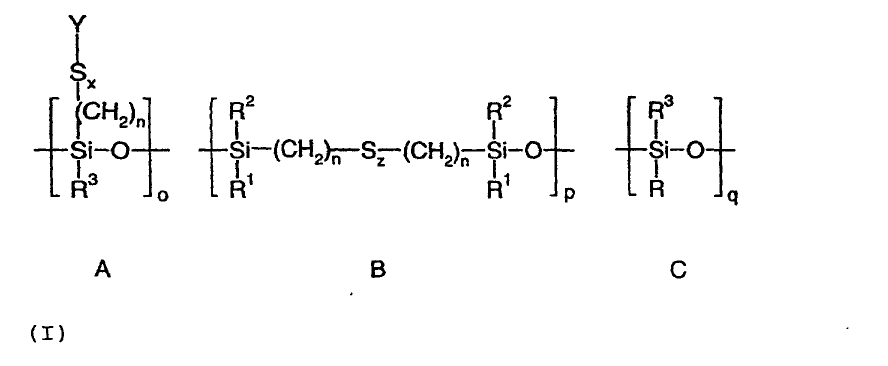 worin
Y = H, CN, - (CH₂)ₙSiRR¹R²;
R, R¹, R², R³, unabhängig voneinander, H, (C₁-C₄)Alkyl, (C₁-C₄)Alkoxy, Halogen oder eine OSiR¹R²R³-Gruppe bedeuten;
x im statistischen Mittel 1 - 6, z im statistischen Mittel 2 - 6 und
n gleich 1 - 8 und
o, p und q jeweils eine ganze, positive Zahl von 1 - 40 mit o + p + q ≥ 2 < 40 sein kann, mit der Maßgabe, daß mindestens im oligomeren Organosilanpolysulfan eine Struktureinheit A oder B vorhanden ist.

Bevorzugt sind oligomere Organosilanpolysulfane der oben beschriebenen Art aus den 3 Struktureinheiten A und/oder B und/oder C 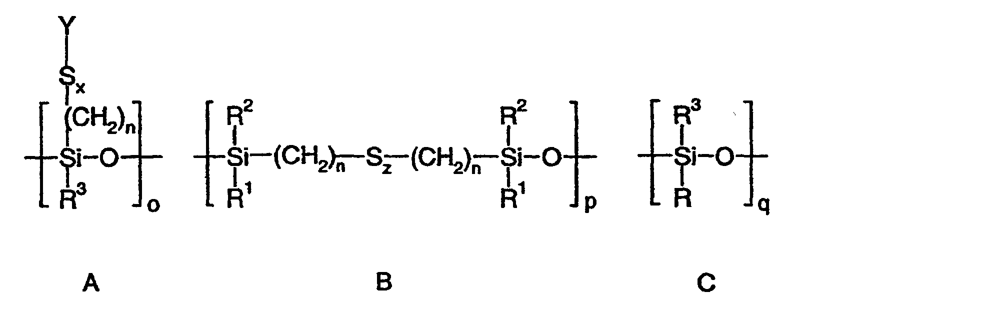 worin
Y, R, R¹, R², R³, x, z und n die oben genannte Bedeutung besitzen und o, p und q jeweils eine ganze, positive Zahl zwischen 1 und 20 mit o + p + q ≥ 2 < 20 sein kann, mit der Maßgabe, daß mindestens eine Struktureinheit A oder B anwesend ist.

Die erfindungsgemäßen oligomeren Organosilanpolysulfane können dabei über Y zyklisch, verzweigt oder linear ausgebildet sein.

Die erfindungsgemäßen Verbindungen können sowohl als einzelne Verbindung mit einem definierten Molekulargewicht, als auch als Oligomerengemisch mit einer Molekulargewichtsverteilung vorliegen. Aus verfahrenstechnischen Gründen ist es in der Regel einfacher, Oligomerengemische herzustellen und anzunehmen. Die Verbindungen besitzen Molekulargewichte zwischen ca. 800 und 16000 g/mol. Bevorzugt haben die erfindungsgemäßen oligomeren Organosilanpolysulfane Molekulargewichte zwischen ca. 800 und 5000 g/mol.

Insbesondere bevorzugt sind die erfindungsgemäßen oligomeren Organosilanpolysulfane aus den Struktureinheiten B und C aufgebaut, die durch Copolymerisation eines geeigneten Polysulfans und eines Organosilans erhalten werden.

Die Herstellung der erfindungsgemäßen oligomeren Organosilanpolysulfane erfolgt durch eine Kondensationsreaktion zweier beliebiger Alkoxysilylstruktureinheiten. Dabei können im Rahmen der oben angegebenen Substitutionsmuster strukturell beliebige schwefelhaltige Organosiliciumverbindungen mit sich selbst oligomerisiert oder mit einer anderen schwefelhaltigen oder nicht schwefelhaltigen Organosiliciumverbindung copolymerisiert werden. Dabei wird zur Darstellung der erfindungsgemäßen oligomeren Organosilanpolysulfane eine monomere Verbindung des Strukturtyps I 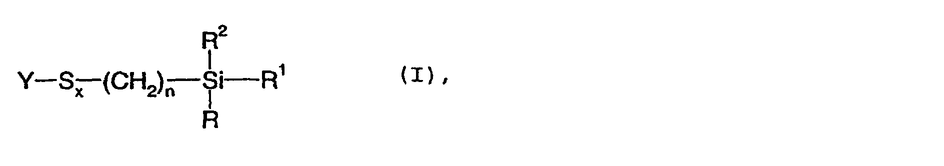 worin
Y = H, CN, -(CH₂)ₙSiRR¹R²;
R, R¹, R², unabhängig voneinander, H, (C₁ - C₄)Alkyl, (C₁- C₄)Alkoxy, Halogen oder eine OSiR¹R²R³-Gruppe bedeuten und x im statistischen Mittel 1 - 6 sein kann, gegebenenfalls in einem Lösungsmittel und/oder gegebenenfalls mit Hilfe eines Katalysators, bei einer Reaktionstemperatur zwischen 0°C und 150°C und unter Zugabe von Wasser mit sich selbst polymerisiert oder unter den analogen Reaktionsbedingungen mit einer Verbindung des Strukturtyps II

   RR¹R²R³Si II
worin
R, R¹, R² und R³, unabhängig voneinander H, (C₁ - C₄) Alkyl, (C₁ - C₄)Alkoxy, Halogen oder eine OSiR¹R²R³-Gruppe bedeuten, copolymerisiert.

Die folgende Auflistung nennt exemplarisch einige (schwefelhaltige) Organosiliciumverbindungen, die sich für die erfindungsgemäße Umsetzung eignen:
Bis-(3-[Triethoxysilyl]-propyl)tetrasulfan,
3-Thiocyanatopropyltriethoxysilan,
3-Mercaptopropyltrimethoxysilan, Propyltriethoxysilan,
Oktyltriethoxysilan, Hexadecyltriethoxysilan,
Dimethyldiethoxysilan, 3-Mercaptopropyltrithoxysilan,
Bis-3-triethoxysilylpropyldisulfan,
Bis-3-triethoxysilylpropyltrisulfan

Die Kondensationsreaktion erfolgt bei Zugabe von Wasser unter Abspaltung von Alkohol und kann dabei in Substanz oder in einem inerten organischen Lösungsmittel oder Gemischen davon, wie beispielsweise in einem aromatischen Lösungsmittel wie Chlorbenzol, einem halogenierten Kohlenwasserstoff, wie Chloroform, Methylenchlorid, einem Ether wie Diisopropylether, tert. Butylmethylether, Tetrahydrofuran oder Diethylether, Acetonitril oder Carbonsäureester, beispielsweise Essigsäureethylester, Essigsäuremethylester oder Essigsäureisopropylester, einem Alkohol, beispielsweise Methanol, Ethanol, n-Propanol, i-Propanol, n-Butanol, sec. Butanol oder tert. Butanol durchgeführt werden. Bevorzugte Lösungsmittel sind dabei Ethanol oder Essigsäureethylester. Die Umsetzung kann kalysiert erfolgen. Der Katalysator kann dabei in katalytischen oder stöchiometrischen Mengen zugestzt werden. Dabei sind alle Arten von sauren, basischen oder nukleophilen Katalysatoren, die dem Fachmann von der SOLGEL-Chemie von Alkoxysilanen bekannt sind (siehe z.B. R. Corriu, D. Leclercq, Angew. Chem. **1996,** *108*, 1524-1540) auch für die Oligomerisierung im Sinne der Erfindung geeignet. Dabei spielt es zusätzlich keine Rolle, ob die Katalysatoren in gleicher Phase wie die Reaktionslösung vorliegen (homogene Katalyse) oder als Feststoffe vorliegen (heterogene Katalyse) und nach beendeter Reaktion abgetrennt werden.

Geeignet ist insbesondere die homogene Katalyse mit einer Lewissäure, wie beispielsweise Tetrabutylorthotitanat oder nukleophil mit Ammoniumfluorid oder heterogen mit Aluminiumoxid. Die basische Katalyse erfolgt beispielsweise mit einer organischen Base wie Triethylamin, Tetramethylpiperidin, Tributylamin oder Pyridin oder mit einer anorganischen Base wie NaOH, KOH, Ca(OH)₂, Na₂CO₃, K₂CO₃, CaCO₃, CaO, NaHCO₃, KHCO₃ oder Alkoholaten wie NaOCH₃ oder NaOC₂H₅. Die nukleophile Katalyse kann mit beliebigen Fluoriden geschehen, beispielsweise Ammoniumfluorid, Natriumfluorid, Kaliumfluorid oder beliebigen Tetraalkylammoniumfluoriden wie Tetrabutylammoniumfluorid. Die saure Katalyse kann mit verdünnten wäßrigen Mineralsäuren oder Lösungen von Lewissäuren in Wasser erfolgen. Bevorzugt ist die Katalyse mit verdünnter wäßrigen NaOH oder einer Lösung von Ammoniumfluorid in Wasser, wobei 1 mol-% Katalysator auf die eingesetzte Wassermenge verwendet wird. Die Reaktionsbedingungen, insbesondere die zuzugebende Wassermenge, müssen so gewählt werden, daß die Reaktionsprodukte nicht zu einem Feststoff polykondensieren. Nach erfolgter Reaktion sind die leichtflüchtigen Bestandteile in dem Fachmann bekannter Weise zu entfernen und der Katalysator in üblicherweise zu desaktivieren beziehungsweise zu entfernen.

Unter der Bezeichnung "Alkyl" sind sowohl "geradkettige" als auch "verzweigte" Alkylgruppen zu verstehen. Unter der Bezeichnung "geradkettige Alkylgruppe" sind beispielsweise Reste wie Methyl-, Ethyl-, n-Propyl, n-Butyl, n-Pentyl, n-Hexyl, unter "verzeigter Alkylgruppe" Reste wie beispielsweise Isopropyl oder tert.-Butyl zu verstehen. Die Bezeichnung Halogen steht für Fluor, Chlor, Brom oder Jod. Die Bezeichnung "Alkoxygruppe" stellt Reste wie beispielsweise Methoxy, Ethoxy, Propoxy, Butoxy, Isopropoxy, Isobutoxy oder Pentoxy dar.

Bei der Angabe der Substituenten, wie z. B. (C₁ - C₄) Alkoxy, bezeichnet die Zahl im Index die Anzahl aller Kohlenstoffatome im Rest.

In den Beispielen 1 bis 4 ist in exemplarischer Weise die Darstellung der erfindungsgemäßen oligomeren Organosilanpolysulfane gezeigt.

Ein weiterer Gegenstand der Erfindung sind Kautschukmischungen, die die neuen oligomeren Organosilanpolysulfane als Haftvermittler oder Verstärkungsadditiv enthalten und nach einem Vulkanisationsschritt resultierende Formkörper,insbesondere Luftreifen oder Reifenlaufflächen, die nach der erfindungsgemäßen Durchführung der Verfahren einen niedrigen Rollwiderstand bei gleichzeitig guter Nässehaftung und hohem Abriebwiderstand besitzen.

Gegenstand der vorliegenden Erfindung sind daher Kautschukmischungen enthaltend Kautschuk, Füllstoff insbesondere auch gefällte Kieselsäure ggf. weitere Kautschukhilfsmittel, sowie mindestens ein oligomeres Organosilanpolysulfan, welches aus den oben beschriebenen Struktureinheiten aufgebaut ist und welches in Mengen von 0,1 bis 15 Gew-% bezogen auf die Menge des eingesetzten Kautschuks, eingesetzt wird.

Durch die Verwendung der erfindungsgemäßen oligomeren Organosilanpolysulfane in Kautschukmischprozessen reduziert sich deutlich die unangenehme Alkoholfreisetzung aufgrund der bereits erfolgten Vorkondensation. Verglichen mit der üblichen Arbeitsweise, beispielsweise durch einfache Verwendung von Bis-(3-[Triethoxysilyl]-propyl)-tetrasulfan (TESPT) als Haftvermittler verringert sich die Alkoholentwicklung um ca. 30 % (vgl. Beispiele 1 bis 4).

Überraschenderweise wurde nur weiterhin gefunden, daß die mit oligomeren Silanen hergestellten Kautschukmischungen und die daraus hergestellten Vulkanisate Vorteile gegenüber Mischungen haben, die gemäß in üblicher Weise mit monomeren Silanen hergestellt werden. Dies zeigt sich insbesondere durch ein verbessertes Wertebild bezüglich der statischen und dynamischen Eigenschaften der hergestellten Vulkanisate. Hierbei kommt es zu verbesserten Zugfestigkeiten, einem erniedrigtem Ball-Rebound (bei 0°C) und erhöhten tan δ (bei 0°C) Werten (vgl. auch Tabellen 3 bis 5). Dies führt zu einem verbesserten Naßrutschverhalten des Reifens. Überraschenderweise wird diese Verbesserung dabei erreicht ohne Verluste im Bereich des Rollwiderstandes (korreliert mit tan δ bei 60°C) in Kauf nehmen zu müssen.

Für den Einsatz in Kautschukmischungen, besonders bevorzugte Oligomere sind solche, die die Struktureinheiten A und B mit Y = (CH₂)ₙSiRR¹R², n= 3 und R, R¹ und R² = OC₂H₅ zu 50 bis 85 % (bestimmt über den Restgehalt an OC₂H₅ mittels ¹H-NMR-Spektroskopie) enthalten und bei denen x und z im statistischen Mittel 2 bis 4 ist.

Die Zugabe der erfindungsgemäßen oligomeren Organosilanpolysulfane sowie die Zugabe der Füllstoffe erfolgt bevorzugt bei Massetemperaturen von 100 bis 200 °C, sie kann jedoch auch später bei tieferen Temperaturen (40 bis 100 °C) z.B. zusammen mit weiteren Kautschukhilfsmitteln erfolgen.

Die oligomeren Organosilanpolysulfane können sowohl in reiner Form als auch aufgezogen auf einen inerten organischen oder anorganischen Träger dem Mischprozeß zugegeben werden. Bevorzugte Trägermaterialien sind Kieselsäuren, natürliche oder synthetische Silikate, Aluminiumoxid oder Ruße.

Als Füllstoffe kommen für die erfindungsgemäßen Kautschukmischungen in Frage:
- Ruße: Die hierbei zu verwendenden Ruße sind nach dem Flammruß-, Furnace- oder Gasruß-Verfahren hergestellt und besitzen BET-Oberflächen von 20 bis 200 m²/g, wie z.B.SAF-,ISAF-, HSAF-, HAF-, FEF- oder GPF-Ruße. Die Ruße können ggf. auch Heteroatome wie z.B. Si enthalten.
- hochdisperse Kieselsäuren, hergestellt z.B. durch Fällung von Lösungen von Silikaten oder Flammenhydrolyse von Siliciumhalogeniden mit spezifischen Oberflächen von 5 bis 1000, vorzugsweise 20 bis 400 m²/g (BET-Oberfläche) und mit Primärteilchengrößen von 10 bis 400 nm. Die Kieselsäuren können gegebenenfalls auch als Mischoxide mit anderen Metalloxiden, wie Al-, Mg-, Ca-, Ba-, Znund Titanoxiden vorliegen.
- Synthetische Silikate, wie Aluminiumsilikat, Erdalkalisilikate wie Magnesiumsilikat oder - Calciumsilikat, mit BET-Oberflächen von 20 bis 400 m²/g und Primärteilchendurchmessern von 10 bis 400 nm.
- Natürliche Silikate, wie Kaolin und andere natürlich vorkommende Kieselsäuren.
- Glasfasern und Glasfaserprodukte (Matten, Stränge) oder Mikroglaskugeln.

Bevorzugt werden Ruße mit BET-Oberflächen von 20 bis 400 m²/g oder hochdisperse Kieselsäuren, hergestellt durch Fällung von Lösungen von Silikaten, mit BET-Oberflächen von 20 bis 400 m²/g in Mengen von 5 bis 150 Gew.-Teilen, jeweils bezogen auf 100 Teile Kautschuk, eingesetzt.

Die genannten Füllstoffe können alleine oder im Gemisch eingesetzt werden. In einer besonders bevorzugten Ausführung des Verfahrens werden 10 bis 150 Gew.-Teile helle Füllstoffe, gegebenenfalls zusammen mit 0 bis 100 Gew.-Teilen Ruß, sowie 0,3 bis 10 Gew.-Teile einer Verbindung der Formel (I), jeweils bezogen auf 100 Gew.-Teile Kautschuk, zur Herstellung der Mischungen eingesetzt.

Für die Herstellung erfindungsgemäßer Kautschukmischungen eignen sich neben Naturkautschuk auch Synthesekautschuke. Bevorzugte Synthesekautschuke sind beispielsweise bei W. Hofmann, Kautschuktechnologie, Genter Verlag, Stuttgart 1980, beschrieben. Sie umfassen u. a.
- Polybutadien (BR)
- Polyisopren (IR)
- Styrol/Butadien-Copolymerisate mit Styrolgehalten von 1 bis 60, vorzugsweise 2 bis 50 Gew.-% (SBR)
- Isobutylen/Isopren-Copolymerisate (IIR)
- Butadien/Acrylnitril-Copolymere mit Acrylnitrilgehalten von 5 bis 60, vorzugsweise 10 bis 50 Gew.-% (NBR)
- teilhydrierter oder vollständig hydrierter NBR-Kautschuk (HNBR)
- Ethylen/Propylen/Dien-Copolymerisate (EPDM)
sowie Mischungen dieser Kautschuke. Für die Herstellung von Kfz-Reifen sind insbesondere anionisch polymerisierte L-SBR-Kautschuke mit einer Glastemperatur oberhalb von -50 °C sowie deren Mischungen mit Dienkautschuken von Interesse.

Die erfindungsgemäßen Kautschukvulkanisate können weitere Kautschukhilfsprodukte enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, wie Triethanolamin, Polyethylenglykol, Hexantriol, die der Kautschukindustrie bekannt sind.

Die Kautschukhilfsmittel werden in üblichen Mengen, die sich unter anderem nach dem Verwendungszweck richten, eingesetzt. Übliche Mengen sind z.B. Mengen von 0,1 bis 50 Gew.-% bezogen auf Kautschuk. Die oligomeren Silane können alleine als Vernetzer dienen. In der Regel empfiehlt sich die Zugabe von weiteren Vernetzern. Als weitere bekannte Vernetzer können Schwefel oder Peroxide eingesetzt werden. Die erfindungsgemäßen Kautschukmischungen können darüber hinaus Vulkanisationsbeschleuniger enthalten. Beispiele für geeignete Vulkanisationsbeschleuniger sind Mercaptobenzthiazole, Sulfenamide, Guanidine, Thiurame, Dithiocarbamate, Thioharnstoffe und Thiocarbonate. Die Vulkanisationsbeschleuniger und Schwefel oder Peroxide werden in Mengen von 0,1 bis 10 Gew.-%, bevorzugt 0.1 bis 5 Gew.-%, bezogen auf Kautschuk, eingesetzt.

Die Vulkanisation der erfindungsgemäßen Kautschukmischungen kann bei Temperaturen von 100 bis 200 °C, bevorzugt 130 bis 180 °C, gegebenenfalls unter Druck von 10 bis 200 bar erfolgen. Die Abmischung der Kautschuke mit dem Füllstoff, gegebenenfalls Kautschukhilfsmitteln und den erfindungsgemäßen oligomeren Silanen (I) kann in üblichen Mischaggregaten, wie Walzen, Innenmischern und Mischextrudern, durchgeführt werden. Die erfindungsgemäßen Kautschukvulkanisate eignen sich zur Herstellung von Formkörpern, z.B. für die Herstellung von Luftreifen, Reifenlaufflächen, Kabelmänteln, Schläuchen, Treibriemen, Förderbändern, Walzenbelägen, Reifen, Schuhsohlen, Dichtungsringen und Dämpfungselementen.

### Beispiele 1-4: Herstellung der oligomeren Organosilanpolysulfane

### Beispiel 1 (Vergleichsbeispiel):

266 g (0.50 mol) Bis-(3-[Triethoxysilyl]-propyl)tetrasulfan (TESPT, Degussa AG) werden mit 1 mL Tetrabutylorthotitanat in einem 500 mL Rundkolben unter Rühren bei 80°C vorgelegt. Anschließend werden 6.75 g (0.38 mol) H₂O, in 10 mL Ethanol p.a. aufgenommen und unter Rühren langsam zugegeben. Nach beendeter Zugabe wird 1 Stunde bei 80°C nachgerührt, dann das Ethanol bei 80°C und 500 - 300 mbar abdestilliert. Anschließend wird das Restflüchtige bei 80°C/30 mbar entfernt. Man erhält ein öliges, gelbes Produkt mit 2,38 Ethoxygruppen pro Si-Einheit (nach ¹H-NMR) und einem Glührückstand von 25,0 %.

### Beispiel 2:

### 133 g (0.25 mol) TESPT werden mit 1 mL

Tetrabutylorthotitanat und 100 mL Ethanol p.a. in einem 500 mL Rundkolben unter Rühren bei 80°C vorgelegt. Anschließend werden 5.40 g (0.30 mol) H₂O, in 10 mL Ethanol p.a. aufgenommen und unter Rühren langsam zugegeben. Die weitere Herstellung folgt der in Beispiel 1 beschriebenen. Man erhält ein hochviskoses, gelbes Produkt mit 2.08 Ethoxygruppen pro Si-Einheit (nach ¹H-NMR) und einem Glührückstand von 25,8 %.

### Beispiel 3:

Die Herstellung erfolgt analog zu Beispiel 1. Es wurden 133 g (0.25 mol) TESPT und 44.0 g (0.21 mol) Propyltriethoxysilan (PTES) als Edukte eingesetzt. Die zugegebene Menge an H₂O beträgt 8.50 g (0.47 mol). Man erhält ein öliges Produkt mit nur 1.85 Ethoxygruppen pro Si-Einheit (nach ¹H-NMR) und einem Glührückstand von 28,8 %.

### Beispiel 4:

Die Herstellung erfolgt analog zu Beispiel 3 mit der Änderung, daß anstatt von PTES, hier 31.0 g (0.21 mol) Dimethyldiethoxysilan (DMDES, Gelest), eingesetzt werden. Das erhaltene ölige Produkt weist laut ¹H-NMR 1.60 Ethoxygruppen pro Si-Einheit auf. Der Glührückstand beträgt 30,3 %.

### Beispiele 5-11: Herstellung der Kautschukmischungen und Vulkanisate

### Allgemeine Durchführungsvorschrift

Die Gummimischung wird zweistufig in einem Innenmischer Werner&Pfleiderer GK1.5N) mit einer Mischzeit von 6 und 5 Minuten bei einer Umdrehungszahl von 70 UPM bis zu einer Ausstoßtemperatur von maximal 155°C, gefolgt von einer Aufmischstufe in einem Innenmischer bei maximal 90°C, entsprechend der Rezeptur wie in folgender Tabelle 1 angegeben, hergestellt. Dabei bedeutet die Einheit phr Gewichtsanteile bezogen auf 100 Teile des eingesetzten Rohkautschuks.

Allgemeine Verfahren zur Herstellung von Kautschukmischungen und deren Vulkanisate sind beispielsweise beschrieben in: Rubber Technology Handbook", W. Hofmann, Hanser Verlag 1994.

Die Vulkanisationszeit für die Prüfkörper beträgt 60 Minuten bei 165°C.

**Tabelle 1**

| Substanz | Menge [phr] |
|---|---|
| 1. Stufe | |
| Buna VSL 5025-1 | 96.0 |
| Buna CB 24 | 30.0 |
| Ultrasil VN3 | 80.0 |
| ZnO | 3.0 |
| Stearinsäure | 2.0 |
| Naftolene ZD | 10.0 |
| Vulkanox 4020 | 1.5 |
| Protector G35P | 1.0 |
| TESPT | 6.4 |

| 2. Stufe | |
|---|---|
| Batch Stufe 1 | |
| 3. Stufe | |
| Batch Stufe 2 | |
| Vulkacit D | 2.0 |
| Vulkacit CZ | 1.5 |
| Schwefel | 1.5 |

Bei dem Polymer VSL 5025-1 handelt es sich um ein in Lösung polymerisiertes SBR-Copolymer der Bayer AG mit einem Styrolgehalt von 25 Gew.-% und einem Butadiengehalt von 75 Gew.-%. Von dem Butadien sind 73 % 1,2, 10 % cis 1,4 und 17 % trans 1,4 verknüpft. Das Copolymer enthält 37,5 phr Öl und weist eine Mooney-Viskosität (ML 1+4/100°C) von etwa 50 auf.

Bei dem Polymer Buna CB 24 handelt es sich um ein cis 1,4 Polybutadien (Titantyp) der Bayer AG mit cis 1,4-Gehalt von 92 %, einem trans 1,4-Gehalt von 4 %, einem 1,2-Gehalt von 4 % und einer Mooney-Viskosität zwischen 44 und 50.

Die Kieselsäure VN3 der Degussa AG besitzt eine BET-Oberfläche von 175 m²/g. TESPT (Bis-(3-[Triethoxysilyl]-propyl)tetrasulfan) wird unter dem Handelsnamen Si 69 von der Degussa AG vertrieben.

Als aromatisches Öl wurde Naftolen ZD der Chemetall verwendet; bei Vulkanox 4020 handelt es sich um PPD der Bayer AG und Protektor G35P ist ein Ozonschutzwachs der HB-Fuller GmbH. Vulkacit D (DPG) und Vulkacit CZ (CBS) sind Handelsprodukte der Bayer AG.

Die gummitechnische Prüfung erfolgt gemäß den in Tabelle 2 angegebenen Prüfmethoden.

**Tabelle 2**

| Physikalische Testung | Norm/ Bedingungen |
|---|---|
| ML 1+4, 100°C | DIN 53523/3, ISO 667 |
| Vulkameterprüfung, 165°C | DIN 53529/3, ISO 6502 |
| Zugversuch am Ring, 23°C | DIN 53504, ISO 37 |
| Zugfestigkeit | |
| Spannungswerte | |
| Bruchdehnung | |
| Shore-A-Härte, 23°C | DIN 53 505 |
| Ball-Rebound, 0 und 60°C | ASTM D 5308 |
| Viskoelast. Eigen., 0 und 60°C | DIN 53 513, ISO 2856 |
| E* | |
| tan δ | |
| DIN-Abrieb, 10 N Kraft | DIN 53 516 |
| Dispersion | ISO/DIN 11345 |

### Beispiele 5, 6 und 7:

Die Durchführung der Beispiele 5 (Vergleichsbeispiel), 6 (Vergleichsbeispiel) und 7 erfolgt gemäß der Allgemeinen Durchführungsvorschrift.

In Abänderung zu Vergleichsbeispiel 5, wird der Mischung in den Beispielen 6 und 7 statt 6 .4 phr TESPT 6.1 phr der oligomeren Silane aus Beispiel 1 und Beispiel 2 eingesetzt. Folgende gummitechnische Daten für Rohmischung und Vulkanisat ergeben sich:

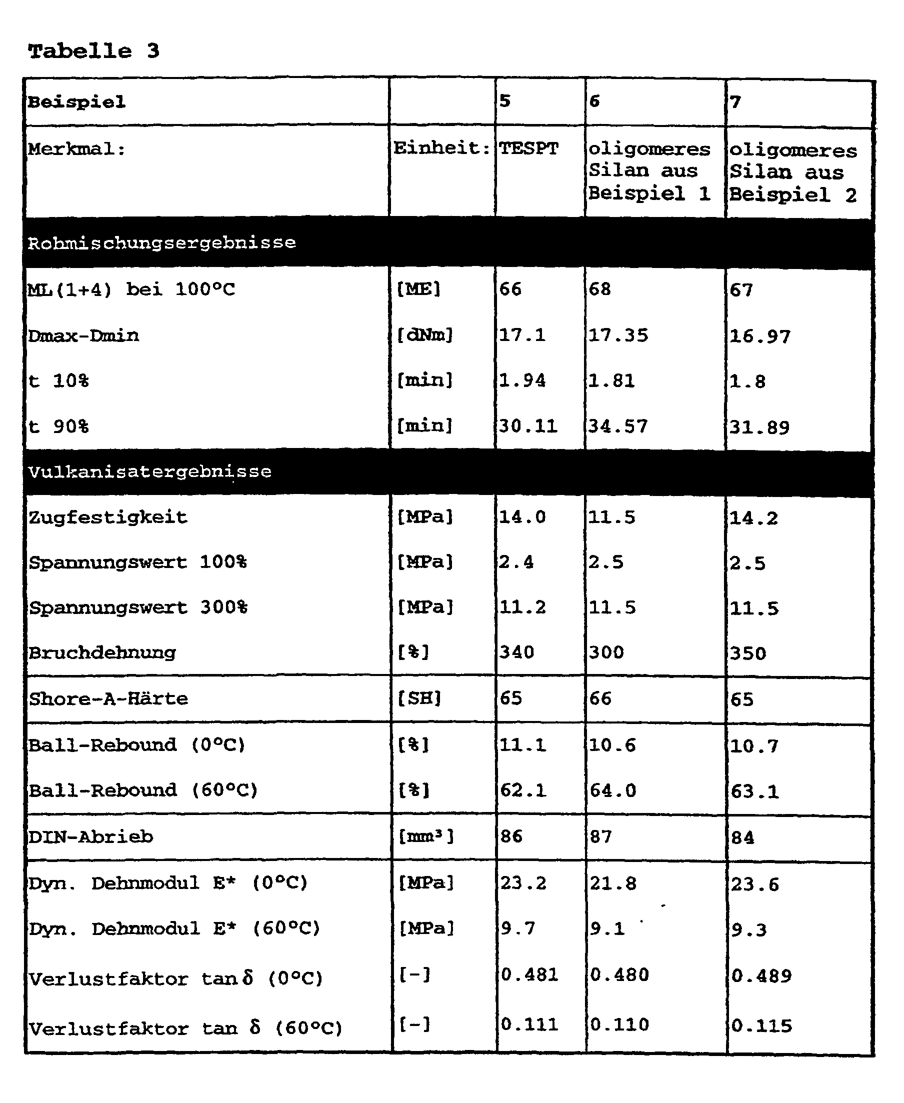

### Beispiel 8 (Vergleichsbeispiel):

In Abänderung zu Vergleichsbeispiel 5 wird statt 6.4 phr TESPT eine Mischung aus 4.8 phr TESPT und 1.6 phr PTES eingesetzt. Die gummitechnischen Daten dieser Mischung und des entsprechenden Vulkanisats werden als Vergleich den gummitechnischen Werten aus Beispiel 9 in Tabelle 4 gegenüber gestellt.

### Beispiel 9:

In Abänderung zu Vergleichsbeispiel 8, wird statt der Mischung aus TESPT und PTES 6.1 phr das oligomere Silan aus Beispiel 3 eingesetzt. Folgende gummitechnische Daten für Rohmischung und Vulkanisat ergeben sich:

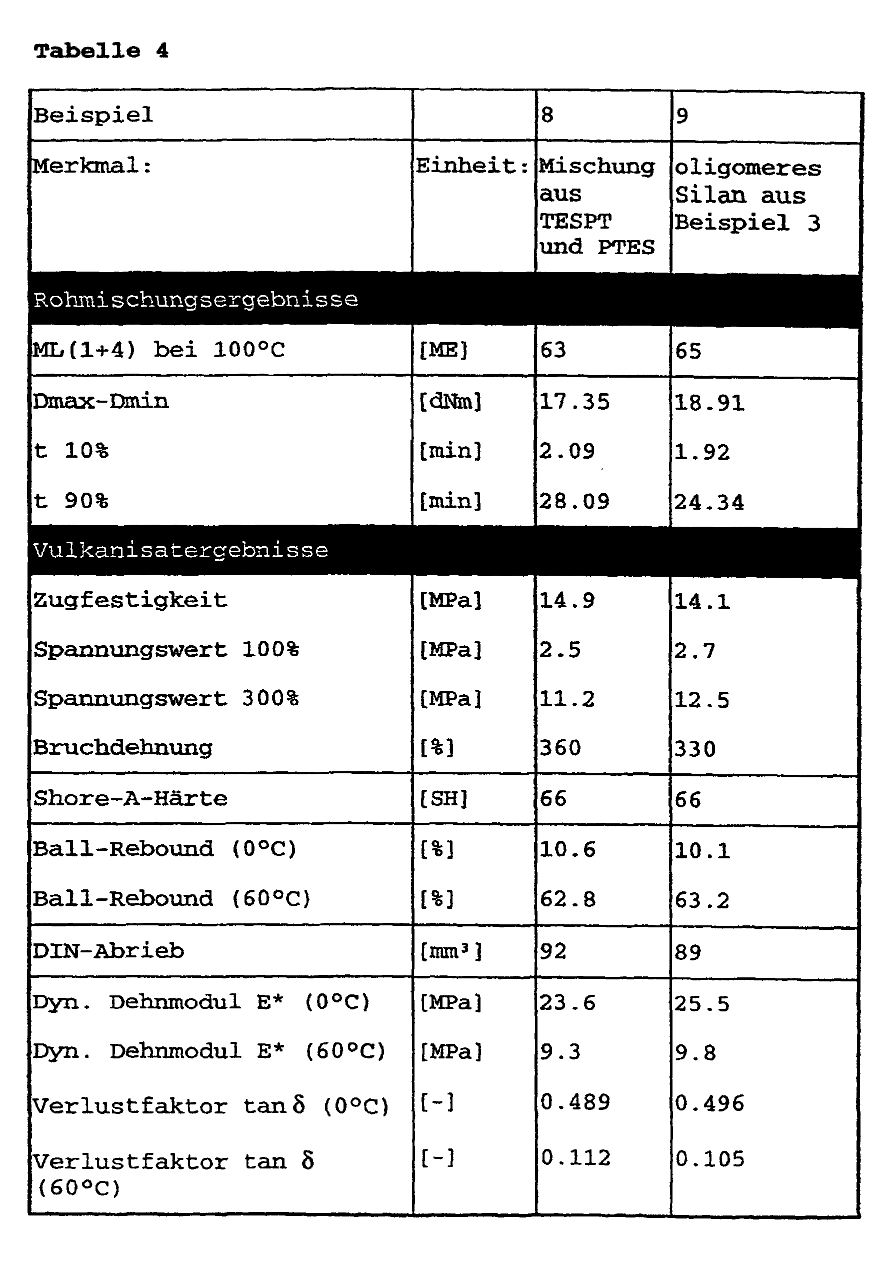

### Beispiel 10: (Vergleichsbeispiel)

In Abänderung zu Vergleichsbeispiel 5, wird statt 6.4 phr TESPT eine Mischung aus 5.2 phr TESPT und 1.2 phr DMDES eingesetzt. Die gummitechnischen Daten dieser Mischung und des entsprechenden Vulkanisats werden in Tabelle 5 zum Vergleich den gummitechnischen Werten aus Beispiel 11 gegenüber gestellt.

### Beispiel 11:

In Abänderung zu Vergleichsbeispiel 10 wird statt der Mischung aus TESPT und DMDES 6.1 phr das oligomere Silans aus Beispiel 4 eingesetzt. Folgende gummitechnische Daten für Rohmischung und Vulkanisat ergeben sich (Tabelle 5):

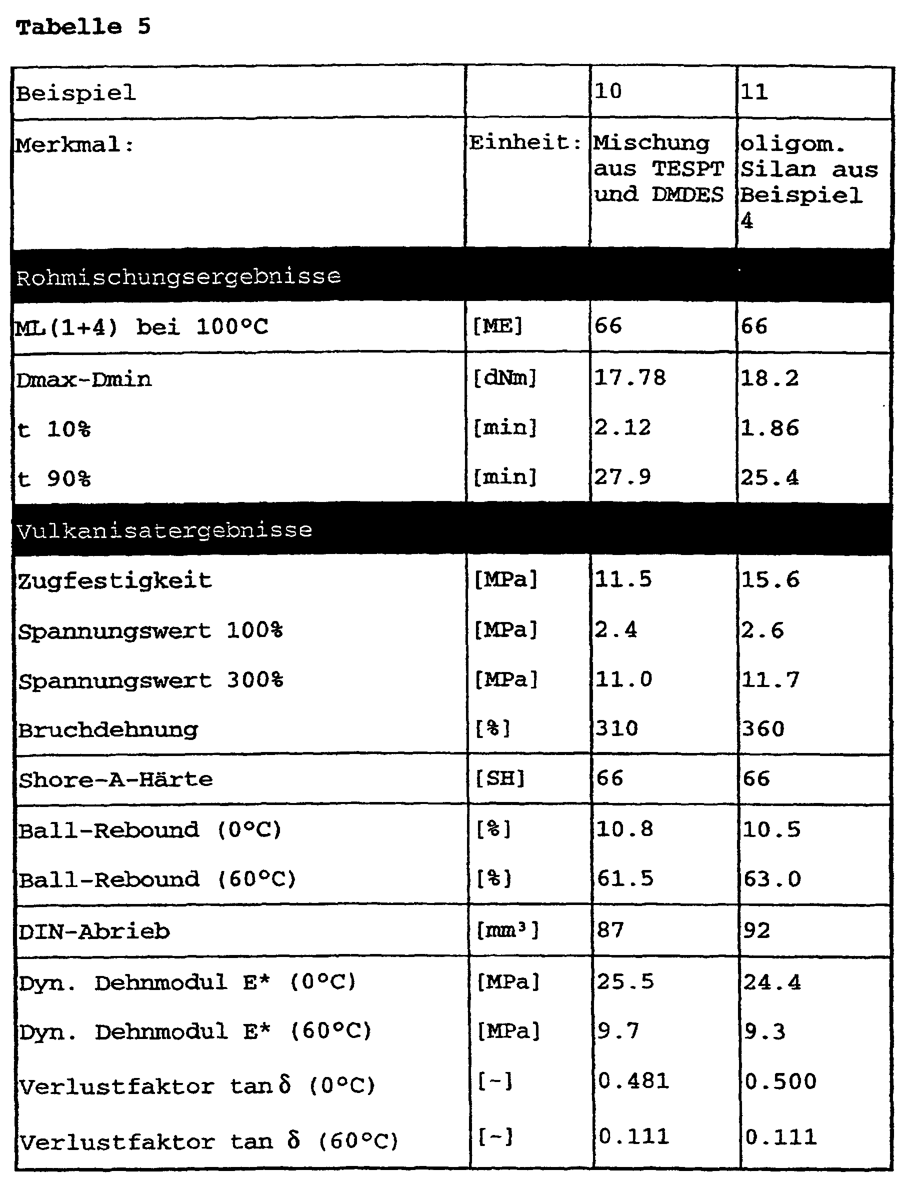

## Patentansprüche

1. Oligomere, nicht zu einem Feststoff polykondensierte Organosilanpolysulfane mit einem Molekulargewicht von 800 bis 16.000 g/mol enthaltend die Struktureinheiten A und/oder B und/oder C in beliebiger linearer, verzweigter oder zyklischer Anordnung verknüpft 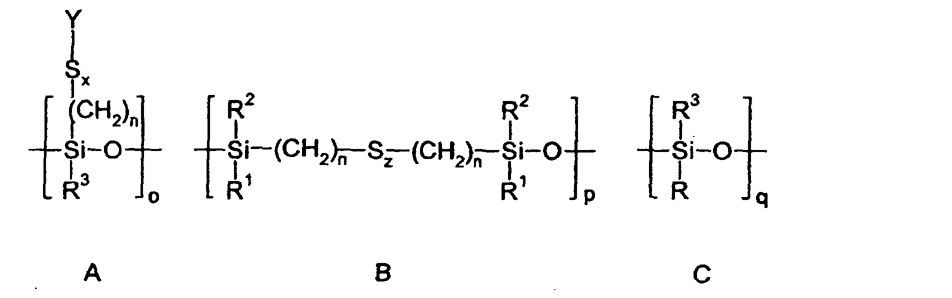 wobei
Y = H, CN, - (CH₂)ₙSiRR¹R²,
n = 1-8,
R, R¹, R², R³, unabhängig voneinander, H, (C₁-C₄)Alkyl, (C₁-C₄)Alkoxy, Halogen oder eine OSiR¹R²R³-Gruppe bedeuten,
x im statistischen Mittel 1 - 6,
z im statistischen Mittel 2 - 6,
n gleich 1 - 8 und
o, p und q jeweils eine ganze positive Zahl zwischen 1 und 40 mit o + p + q ≥ 2 < 40 sein kann, mit der Maßgabe, daß mindestens eine Struktureinheit A oder B anwesend ist und die Alkoxygruppen pro Si-Einheit < 2,38 ist.

2. Oligomere Organosilanpolysulfane gemäß Anspruch 1,
**dadurch gekennzeichnet,**
**daß** das Organosilanpolysulfan, die beiden Struktureinheiten A und B mit Y = -(CH₂)ₙSiRR¹R², R = R¹ = R² = Ethoxy, n = 3, zu 50 - 85 % enthält wobei x sowie z im statischen Mittel 2 - 4 bedeuten.

3. Oligomere Organosilanpolysulfane gemäß einem der Ansprüche 1 oder 2,
**dadurch gekennzeichnet,**
**daß** sie aus den Struktureinheiten B und C bestehen, wobei R, R¹, R², R³, n, z, p und q die in Anspruch 1 angegebene Bedeutung haben.

4. Oligomere Organosilanpolysulfane gemäß einem oder mehreren der voranstehenden Ansprüche,
**dadurch gekennzeichnet,**
**daß** es sich um ein Gemisch an Organosilanpolysulfanen unterschiedlicher Kettenlänge handelt.

5. Verfahren zur Herstellung der oligomeren Organosilanpolysulfane gemäß einem der voranstehenden Ansprüche 1 bis 4,
**dadurch gekennzeichnet,**
**daß** eine Verbindung des allgemeinen Strukturtyps I 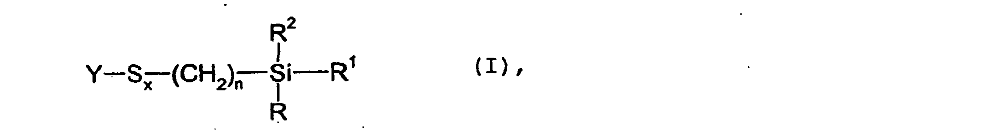 worin
Y = H, CN, -(CH₂)ₙSiRR¹R²,
R, R¹, R², unabhängig voneinander, H, (C₁ - C₄)Alkyl, (C₁ - C₄)Alkoxy, Halogen oder eine OSiR¹R²R³-Gruppe bedeuten und x im statistischen Mittel 1 - 6 sein kann, gegebenenfalls in einem Lösungsmittel und/oder gegebenenfalls mit Hilfe eines Katalysator, bei einer Reaktionstemperatur zwischen 0°C und 150°C und unter Zugabe von Wasser mit sich selbst polymerisiert wird oder unter den analogen Reaktionsbedingungen mit einer Verbindung des Strukturtyps II
RR¹R²R³Si II
worin
R, R¹, R² und R³, unabhängig voneinander, H, (C₁ - C₄)Alkyl, (C₁ - C₄)Alkoxy, Halogen oder eine OSiR¹R²R³-Gruppe bedeuten, copolymerisiert.

6. Verfahren gemäß Anspruch 5,
**dadurch gekennzeichnet,**
**daß** als schwefelhaltige Organosiliciumverbindung Bis-(3-[Triethoxysilyl]-propyl)tetrasulfan mit Propyltriethoxy-silan oder Dimethylethoxysilan copolymerisiert wird.

7. Verwendung der oligomeren Organosilanpolysulfane gemäß einem oder mehreren der Ansprüche 1 bis 4 in Kautschukmischungen.

8. Kautschukmischungen, enthaltend ein oligomeres Organosilanpolysulfan gemäß einem der Ansprüche 1 bis 4.

9. Kautschukmischungen gemäß Anspruch 8,
**dadurch gekennzeichnet,**
**daß** das Organosilanpolysulfan in einer Menge von 0,1 bis 15 Gew.% bezogen auf die Menge des eingesetzten Kautschuks eingesetzt wird.

10. Kautschukmischungen gemäß den Ansprüchen 8 oder 9,
**dadurch gekennzeichnet,**
**daß** das Organosilanpolysulfan die beiden Struktureinheiten A und B mit Y = -(CH₂)ₙSiRR¹R², wobei R = R¹ = R²= Ethoxy und n = 3 bedeuten, zu 50 - 85 % enthält und in denen x und y im statistischen Mittel 2 bis 4 sind.

11. Kautschukmischungen gemäß einem oder mehreren der voranstehenden Ansprüche 8 bis 10,
**dadurch gekennzeichnet,**
**daß** sie einen Synthesekautschuk, eine Kieselsäure als Füllstoff und ein oligomeres Organosilanpolysulfan enthalten, das durch Polymerisation von Bis-(3-[Triethoxysilyl]-propyl)tetrasulfan oder durch Copolymerisation von Bis-(3-[Triethoxysilyl]-propyl)tetrasulfan und Propyltriethoxysilan erhalten wurde.

12. Verfahren zur Herstellung von Kautschukmischungen, die neben dem Kautschuk mindestens einen Füllstoff enthalten,
**dadurch gekennzeichnet,**
**daß** man ein oligomeres Organosilanpolysulfan gemäß einem der Ansprüche 1 bis 4 mit dem Kautschuk mischt.

13. Formkörper, erhältlich aus einer Kautschukmischung gemäß einem der Ansprüche 8 bis 11.

14. Formkörper gemäß Anspruch 13,
**dadurch gekennzeichnet,**
**daß** es sich um einen Luftreifen handelt.

15. Formkörper gemäß Anspruch 13,
**dadurch gekennzeichnet,**
**daß** es sich um eine Reifenlauffläche handelt.

16. Verwendung der Kautschukmischungen gemäß einem der Ansprüche 8 bis 11 zur Herstellung von Formkörpern, insbesondere Luftreifen oder Reifenlaufflächen.

## Claims

1. Oligomeric organosilanepolysulfanes, not polycondensed to give a solid and with a molecular weight of 800 to 16,000 g/mol, containing the structural units A and/or B and/or C linked in any linear, branched or cyclic arrangement, 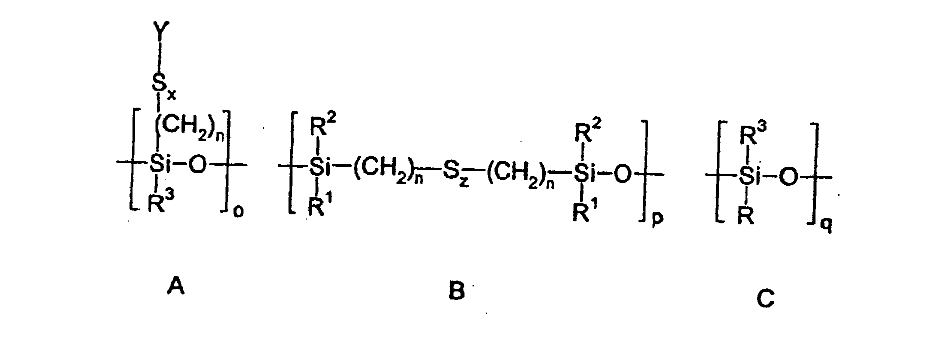 wherein
Y = H, CN, -(CH₂)ₙSiRR¹R²;
n = 1-8,
R, R¹, R² and R³, independently, represent H, (C₁-C₄)alkyl, (C₁-C₄)alkoxy, halogen or a OSiR¹R²R³ group;
x, as a statistical average, is 1 - 6,
z, as a statistical average, is 2 - 6,
n is 1 - 8 and
o, p and q are each a positive integer between 1 and 40 where o + p + q may be ≥ 2 and < 40, with the proviso that at least one structural unit A or B is present and the number of alkoxy groups per Si unit is < 2.38.

2. Oligomeric organosilanepolysulfanes according to Claim 1, **characterised in that** the organosilanepolysulfane contains 50 to 85 % of the two structural units A and B in which Y = -(CH₂)ₙSiRR¹R², R = R¹ = R² = ethoxy, n = 3, wherein x and z, as a statistical average, are 2 - 4.

3. Oligomeric organosilanepolysulfanes according to one of Claims 1 or 2,
**characterised in that** they consist of the structural units B and C, wherein R, R¹, R², R³, n, z, p and q are defined in the same way as in Claim 1.

4. Oligomeric organosilanepolysulfanes according to one or more of the preceding Claims,
**characterised in that** they are a mixture of organosilanepolysulfanes with different chain lengths.

5. A process for preparing oligomeric organosilanepolysulfanes according to one of the preceding Claims 1 to 4,
**characterised in that** a compound of the structural type I 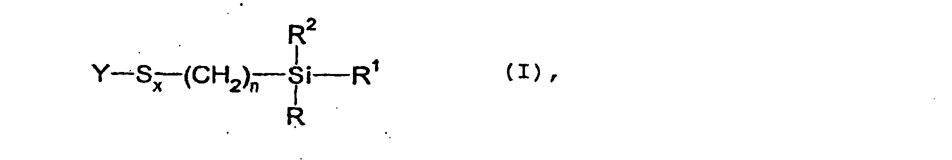 in which
Y = H, CN, -(CH₂)ₙSiRR¹R²;
R, R¹ and R², independently, represent H, (C₁-C₄)alkyl, (C₁ - C₄)alkoxy, halogen or a OSiR¹R²R³ group and x, as a statistical average, may be 1 to 6, optionally in a solvent and/or optionally with the aid of a catalyst, is polymerised with itself at a reaction temperature between 0°C and 150°C and with the addition of water or is copolymerised under similar reaction conditions with a compound of the structural type II
RR¹R²R³Si (II)
in which
R, R¹, R² and R³, independently, represent H, (C₁-C₄)alkyl, (C₁ - C₄)alkoxy, halogen or a OSiR¹R²R³ group.

6. A process according to Claim 5,
**characterised in that** bis(3-[triethoxysilyl]-propyl)tetrasulfane as the sulfur-containing organosilicon compound is copolymerised with propyltriethoxysilane or dimethylethoxysilane.

7. Use of oligomeric organosilanepolysulfanes according to one or more of Claims. 1 to 4 in rubber mixtures.

8. Rubber mixtures containing an oligomeric organosilanepolysulfane according to one of Claims 1 to 4.

9. Rubber mixtures according to Claim 8,
**characterised in that** the organosilanepolysulfane is used in an amount of 0.1 to 15 wt.%, with respect to the amount of rubber used.

10. Rubber mixtures according to Claims 8 or 9,
**characterised in that** the organosilanepolysulfane contains 50 to 85 % of the two structural units A and B in which Y = -(CH₂)ₙSiRR¹R², wherein R = R¹ = R² = ethoxy and n = 3 and in which x and y, as a statistical average, are 2 to 4.

11. Rubber mixtures according to one or more of the preceding Claims 8 to 10,
**characterised in that** they contain a synthetic rubber, a silica as filler and an oligomeric organosilanepolysulfane which has been obtained by the polymerisation of bis-(3-[triethoxysilyl]-propyl)tetrasulfane or by the copolymerisation of bis-(3-[triethoxysilyl]-propyl)tetrasulfane and propyltriethoxysilane.

12. A process for preparing rubber mixtures which contain, in addition to the rubber, at least one filler,
**characterised in that** an oligomeric organosilanepolysulfane according to one of Claims 1 to 4 is mixed with the rubber.

13. A moulded item, obtainable from a rubber mixture according to one of Claims 8 to 11.

14. A moulded item according to Claim 13,
**characterised in that** it is a pneumatic tyre.

15. A moulded item according to Claim 13,
**characterised in that** it is a tyre tread.

16. Use of rubber mixtures according to one of Claims 8 to 11 to produce moulded items, in particular pneumatic tyres or tyre treads.

## Revendications

1. Organosilanepolysulfanes non poly-condensés en une matière solide, oligomères, d'un poids moléculaire de 800 à 16 000 g/mole. contenant les unités structurelles A et/ou B et/ou C, reliées dans une disposition linéaire, ramifiée ou cyclique quelconque : 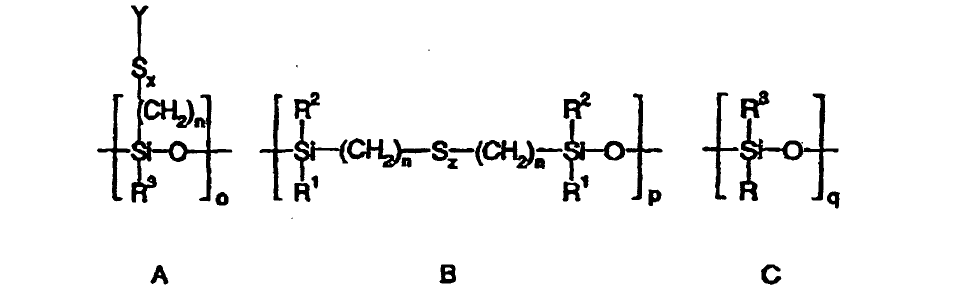 dans lesquelles:
Y = H, CN, -(CH₂)nSiRR¹R²;
n=1-8
R, R¹, R², R³ représentent, indépendamment les uns des autres, H, alkyle en (C₁-C₄), alkoxy en (C₁-C₄), halogène ou un groupe OSiR¹R²R³;
x est égal en moyenne statistique à 1 - 6,
z est égal en moyenne statistique à 2 - 6 et
n est égal à 1 - 8 et
o, p et q peuvent représenter chacun un nombre positif entier de 1 à 40, avec
o + p + q ≥ 2 < 40, avec la précision qu'au moins une unité structurelle A ou B est présente et que le nombre de groupes alkoxy par unité de Si est < 2,38.

2. Organosilanepolysulfanes oligomères selon la revendication 1,
**caractérisés en ce que**,
l'organosilanepolysulfane contient les deux unités structurelles A et B avec
Y = -(CH₂)nSiRR¹R², R = R¹ = R² = éthoxy, n = 3. à raison de 50 - 85 %. x et z ayant pour valeur en moyenne statistique 2 - 4.

3. Organosilanepolysulfanes oligomères selon l'une ou l'autre des revendications 1 ou 2,
**caractérisés en ce qu'**
ils sont constitués des unités structurelles B et C, R, R¹, R², R³, n, z, p et q ayant la signification indiquée dans la revendication 1.

4. Organosilanepolysulfanes oligomères selon l'une ou plusieurs des revendications précédentes,
**caractérisés en ce qu'**
il s'agit d'un mélange d'organosilanepolysulfanes d'une longueur de chaîne variable.

5. Procédé de préparation des organosilanepolysulfanes oligomères selon l'une quelconque des revendications 1 à 4 précédentes.
**caractérisé en ce que**,
un composé du type de structure général (I). 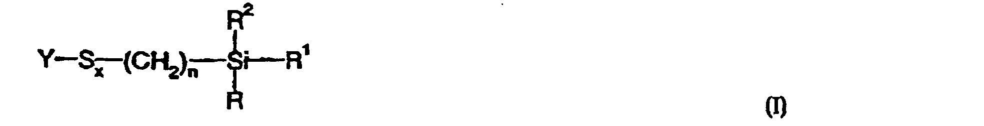 dans lequel
Y = H, CN, -(CH₂)nSiRR¹R²;
R, R¹, R² représentent, indépendamment les uns des autres, H, alkyle en (C₁-C₄), alkoxy en (C₁-C₄), halogène ou un groupe OSiR¹R²R³; et x peut être égal en moyenne statistique à 1 - 6, est polymérisé avec lui-même, le cas échéant dans un solvant et/ou le cas échéant à l'aide d'un catalyseur, à une température de réaction entre 0°C et 150°C et avec addition d'eau ou est copolymérisé dans des conditions de réaction analogues avec un composé du type de structure II
RR¹R²R³Si (II)
dans lequel
R, R¹, R², R³ représentent, indépendamment les uns des autres, H, alkyle en (C₁-C₄), alkoxy en (C₁-C₄), halogène ou un groupe OSiR¹R²R³.

6. Procédé selon la revendication 5,
**caractérisé en ce qu'**
on copolymérise comme composé organosilicium soufré le bis-(3-[triéthoxysilyl]-propyl)tétrasulfane avec le propyltriéthoxysilane ou le dimêthyléthoxysilane.

7. Utilisation des organosilanepolysulfanes oligomères selon une ou plusieurs des revendications 1 à 4, dans des mélanges de caoutchouc.

8. Mélanges de caoutchouc contenant un organosilanepolysulfane oligomère selon l'une quelconque des revendications 1 à 4.

9. Mélanges de caoutchouc selon la revendication 8,
**caractérisés en ce que**
l'organosilanepolysulfane est utilisé en une quantité de 0,1 à 15 % en poids rapporté à la quantité de caoutchouc utilisée.

10. Mélanges de caoutchouc selon la revendication 8 ou 9,
**caractérisés en ce que**
l'organosilanepolysulfane contient les deux unités structurelles A et B avec
Y = -(CH₂)nSiRR¹R², R = R¹ = R² = éthoxy et n = 3 à raison de 50 - 85 % et dans lesquelles x et y sont égaux en moyenne statistique à 2 à 4.

11. Mélanges de caoutchouc selon une ou plusieurs des revendications 8 à 10
**caractérisés en ce qu'**
ils contiennent un caoutchouc de synthèse, un acide silicique comme charge et un organosilanepolysulfane oligomère, qui a été obtenu par polymérisation de bis-(3-[triéthoxysilyl]-propyl)tétrasulfane ou par copolymérisation de bis-(3-[triéthoxysilyl]-propyl)tétrasulfane et de propyltriéthoxysilane.

12. Procédé de préparation de mélanges de caoutchouc qui contiennent, en plus du caoutchouc, au moins une charge,
**caractérisé en ce qu'**
on mélange un organosilanepolysulfane oligomère selon l'une quelconque des revendications 1 à 4 avec le caoutchouc.

13. Objet moulé pouvant être obtenu à partir d'un mélange de caoutchouc selon l'une quelconque des revendications 8 à 11.

14. Objet moulé selon la revendication 13,
**caractérisé en ce qu'**
il s'agit d'un pneumatique.

15. Objet moulé selon la revendication 13,
**caractérisé en ce qu'**
il s'agit d'une bande de roulement de pneumatique.

16. Utilisation des mélanges de caoutchouc selon l'une quelconque des revendications 8 à 11 pour la fabrication d'objets moulés, en particulier de pneumatiques ou de bandes de roulement de pneumatiques.
